# EUROPÄISCHE PATENTSCHRIFT

(11) **EP 2 748 067 B1**
(45) Veröffentlichungstag und Bekanntmachung des Hinweises auf die Patenterteilung: **06.04.2016**
(21) Anmeldenummer: 12751424.8
(22) Anmeldetag: 16.08.2012
(51) Int. Cl.: B65B 25/14, B65D 37/00, A45C 3/00, B07C 3/00, A45C 5/00, B65B 35/44, B65B 35/50, B65B 63/02, B65D 33/06, B65H 29/58, B65H 31/06, B65D 30/10, B65H 31/24, B65H 33/12, B65B 5/10

(54) **BEFÜLLSYSTEM ZUM EINBRINGEN VON FLÄCHIGEN ARTIKELN IN EINEN BEHÄLTER**
FILLING SYSTEM FOR INTRODUCING FLAT ARTICLES INTO A CONTAINER
SYSTÈME DE REMPLISSAGE POUR L'INTRODUCTION D'ARTICLES PLATS DANS UN CONTENANT

(30) Priorität: 24.08.2011 CH 13822011
(43) Veröffentlichungstag der Anmeldung: 02.07.2014
(73) Patentinhaber: Ferag AG, 8340 Hinwil (CH)
(72) Erfinder: SIGRIST, Sergio, CH-8340 Hinwil (CH)
(74) Vertreter: Frei Patent Attorneys
(86) Internationale Anmeldenummer: PCT/CH2012/000192
(87) Internationale Veröffentlichungsnummer: WO 2013/026173

(56) Entgegenhaltungen:
- WO-A1-2005/048095
- WO-A1-2006/087622
- US-A1- 2003 041 570
- US-A1- 2004 098 948

## Beschreibung

Die Erfindung bezieht sich auf ein System und ein Verfahren zum Befüllen von Behältern mit flächigen Artikeln sowie auf Austragetaschen zur Verwendung in Zusammenhang mit solchen Systemen oder Verfahren. Dabei umfasst das System einen Behälter und eine Befülleinrichtung mit einer Fördervorrichtung zum Fördern der Artikel sowie einen Stapelmechanismus zum Stapeln der Artikel im Behälter.

### STAND DER TECHNIK

Befüllsysteme zum Stapeln von Artikeln in Behältern existieren bereits in verschiedenen Ausführungsformen. Beispielsweise stapelt ein in US 2004 0 098 948 A1 beschriebenes Befüllsystem mit einer Fördervorrichtung Artikel in Behälter, wobei die dargestellten Behälter eine starre Form aufweisen und in leerem Zustand ineinander stapelbar sind.

Ein Nachteil der bestehenden Befüllsysteme liegt darin, dass sich die darin befüllten Behälter nur bedingt zum Austragen der Artikel eignen. Mit Austragen ist eine händische Verteilung der Artikel an verschiedene Empfänger und/oder den Empfängern zugeordnete Lokalitäten gemeint, wobei mindestens ein Mensch als Austräger die Artikel mindestens auf einem Teilstück des Weges von dem Befüllsystem zum Empfänger bzw. zur Lokalität persönlich transportiert und manuell ablegt und insbesondere im Behälter trägt. Insbesondere können verschiedene Empfänger bzw. Lokalitäten räumlich voneinander getrennt sein. Ein typisches Beispiel für das Austragen von Artikeln ist eine Verteilung von Briefpost durch einen Postboten.

Die im Stand der Technik beschriebenen befüllten starren Behälter sind in Betracht auf das Austragen sperrig, unhandlich zu Transportieren und umständlich zu Bedienen. Insbesondere sind die befüllten starren Behälter bei der Entnahme der Artikel umständlich zu bedienen, wenn etwa ein Austräger stehend und ohne Hilfsmittel oder Ablage- bzw. Stützmöglichkeiten nur mit zwei Händen arbeitet.

Zudem nutzen die Behälter die maximale Nutzlast, Bewegungs- und Bedienmöglichkeiten sowie anatomische Eigenheiten der Austräger nicht ergonomisch und nicht effizient aus.

Die von im Stand der Technik beschriebenen Befüllsysteme befüllten Behälter werden aus den oben genannten Gründen nicht zum Austragen von Artikeln verwendet, sondern in der Intralogistik, beispielsweise als Transport- und/oder Sammelbehälter zwischen Stationen von Verarbeitungsprozessen. Wenn sich in solchen Behältern befindliche Artikel ausgetragen werden sollen, werden die Artikel beispielsweise noch umgepackt, was arbeits- und zeitintensiv ist, oder die Behälter werden mit motorisierten oder unmotorisierten Transportmitteln (wie etwa Automobile und/oder Motor- bzw. Fahrräder jeder Grösse und Bauform, Handwagen und Anhänger) einzeln oder bevorzugt in einer Mehrzahl in die. Nähe zum Empfänger bzw. zur Lokalität gebracht, aber nicht zum Empfänger bzw. der Lokalität selber. Dadurch muss der Austräger mit dem Produkt einen Weg zwischen Behälter und Empfänger bzw. Lokalität zurücklegen, was Zeit kostet und besonders bei mehrmaligem Zurücklegen des Weges ineffizient ist.

Ein weiterer Nachteil der im Stand der Technik beschriebenen Befüllsysteme besteht in einer relativ schlechten Zugänglichkeit und/oder einer mangelnden Übersicht über die Artikel. Zwar stapeln die Befüllsysteme die Artikel häufig in einer zuvor definierten Reihenfolge im Behälter ab, aber die Artikel sind meist nur an einem Stapelende und daher nur sequentiell in der zuvor definierten Reihenfolge zugänglich. Zudem ist nicht einfach und rasch festzustellen, ob gegebenenfalls mehrere Artikel demselben Empfänger zuzustellen sind. Ebenso wenig sind mehrere Artikel für denselben Empfänger nicht einfach und rasch ergreifbar. Das Austragen von Artikeln, welche durch von im Stand der Technik beschriebenen Befüllsysteme in Behälter gestapelt werden, ist aus diesen Gründen nicht ergonomisch und nicht effizient.

WO 2005 048 095 A1 offenbart eine Vorrichtung, welche Post sortiert und Austragetaschen mit der sortierten Post befüllt. Dabei wird der Bestimmungsort jedes einzelnen Poststücks bestimmt. Jedes einzelne Poststück wird dann in einer von einer Mehrzahl von temporären Speicherkammern der Sortiervorrichtung gelagert, welche dem Bestimmungsort zugeordnet ist. Jeder dieser temporären Speicherkammern ist ein Behälterfach von einer Mehrzahl von Behälterfächern einer Austragetasche zugeordnet. Von jeder temporären Speicherkammer werden dann die Poststücke in das entsprechende Behälterfach überführt.

### DARSTELLUNG DER ERFINDUNG

Es ist deshalb Aufgabe der Erfindung, ein Befüllsystem der eingangs genannten Art zu schaffen, welche die oben genannten Nachteile behebt. Es ist also ein Befüllsystem zu schaffen, welche die Artikel in einer zum Austragen geeigneten Art und Weise bereitstellt.

Diese Aufgabe löst ein Befüllsystem mit den Merkmalen des Patentanspruches 1.

Die vom Befüllsystem befüllten Behälter sind erfindungsgemäss als Austragetaschen und die flächigen Artikel als Zustelleinheiten ausgestaltet, wobei die Zustelleinheiten einen oder mehrere flächige Artikel umfassen.

Das erfindungsgemässe Befüllsystem umfasst eine Austragetasche und eine Befülleinrichtung, welche über einen Stapelmechanismus verfügt. Das Befüllsystem umfasst eine Steuerungsvorrichtung, welche den Stapelmechanismus derart steuert, dass die Zustelleinheiten als Artikelstrom durch eine erste Öffnung der Austragetasche in einen Stauraum der Austragetasche eingebracht werden und die eingebrachten Zustelleinheiten im Stauraum einen Stapel bilden. Der Stapelmechanismus stapelt Zustelleinheiten in Austragetaschen. Das Stapeln von Zustelleinheiten statt von einzelnen Artikeln hat den Vorteil, dass ein oder mehrere flächige Artikel in einer Zustelleinheit zusammengefasst sind. Als flächige Artikel werden insbesondere Druckprodukte (wie etwa Zeitungen und/oder Zeitschriften), Briefe, Werbeartikel, Warenproben, folierte Säcke umfassend beispielsweise Tshirts oder Fahnen, Karten, Broschüren,

Prospekte, Flyer, CDs, DVDs, Tütensuppen, Teebeutel und/oder weitere flache und insbesondere flexible Gegenstände bezeichnet.

Die Austragetasche ist auf die Möglichkeiten, Einschränkungen, Ansprüche und die Leistungsfähigkeit eines Austrägers abgestimmt und ist einfach und effizient zu bedienen und handlich und ergonomisch zu transportieren. Die vom Stapelmechanismus befüllte Austragetasche kann vom Austräger direkt benutzt werden, um die Zustelleinheiten ergonomisch und effizient auszutragen, und es ist kein Umpacken der Zustelleinheiten erforderlich. Somit können die Artikel anschliessend an das Befüllsystem einfach, ergonomisch und effizient ausgetragen werden.

Beim Empfänger angelangt, kann der Austräger die entsprechende Zustelleinheit einfach und effizient aus der mitgeführten Austragetasche entnehmen, führt den gesamten Inhalt der Austragetasche bei sich und kann dadurch Austragewege kürzen und/oder einsparen. Besonders bevorzugt sind alle Artikel, welchen denselben Empfänger aufweisen, in nur einer Zustelleinheit zusammengefasst, so dass der Austräger einen guten Überblick über alle Artikel hat und die jedem Empfänger zugehörigen Artikel in kurzer Zeit und einfach zugänglich sind. Durch die oben genannten Vorteile verkleinert sich der Aufwand für das Austragen, und die Anzahl von Prozessschritten zwischen Befüllsystem und Austragen wird reduziert.

Die Befülleinrichtung weist eine Fördervorrichtung zum Einbringen von flächigen Artikeln in einen Behälter auf, welche insbesondere mindestens einen Bandförderer und insbesondere mindestens einen Doppelbandförderer umfasst. Dabei kann beispielsweise ein Fördervorrichtungsende beweglich ausgestaltet sein. Die geförderten Zustelleinheiten werden an einem Abgabepunkt von der Fördervorrichtung abgegeben, und durch ein bewegliches Fördervorrichtungsende kann der Abgabepunkt seine Position verändern. Ein bewegliches Fördervorrichtungsende kann Teil des Stapelmechanismus sein. Der Stapelmechanismus kann einen oder mehrere Teile der Befülleinrichtung umfassen. Bevorzugt verläuft dabei eine Förderrichtung der Fördervorrichtung zu und in der Befülleinrichtung horizontal oder im Wesentlichen horizontal. Die Förderrichtung kann dabei in der Befülleinrichtung ein- oder mehrmals die Richtung wechseln.

Weitere bevorzugte Ausführungsformen gehen aus den abhängigen Patentansprüchen hervor. Dabei sind Merkmale der Vorrichtungsansprüche sinngemäss mit den Verfahrensansprüchen kombinierbar und umgekehrt.

In einer bevorzugten Ausführungsform enthält die Zustelleinheit eine Umfassungseinheit, welche flächig ist, auf mindestens einer Seite mindestens teilweise offen ist und auf mindestens einer Seite mindestens teilweise geschlossen ist, so dass die Umfassungseinheit einen Umschlag oder eine Tasche bildet.

Die Umfassungseinheit bildet einen Umschlag oder eine Tasche, welche den mindestens einen Artikel mindestens teilweise umschliesst und auf diese Weise zusammenfasst. Dies hat den Vorteil, dass ein Zusammenhang zwischen verschiedenen einzelnen Artikeln rasch und einfach ersichtlich ist und die miteinander in Zusammenhang stehenden Artikel gemeinsam ergriffen werden können. Eine Umfassungseinheit bildet einen umschliessenden, offenen Umschlag und die von der Umfassungseinheit umfassten flächigen Artikel werden als Kollektion bezeichnet. Eine Zustelleinheit kann also vorzugsweise aus einer Umfassungseinheit und einer Kollektion bestehen.

Im Detail beschrieben ist die Umfassungseinheit flexibel und biegsam. Die Umfassungseinheit kann ein Bogen mit einem ein- oder mehrschichtigen bzw. - lagigen Aufbau sein. Bevorzugt besteht wenigstens eine Schicht bzw. Lage aus Papier, Karton oder Pappe. Mehrere Lagen können z. B. miteinander verklebt sein. Weitere Schichten können auch aus Metall oder Kunststoff bestehen. Die Kunststoffschicht kann mittels Extrusion, Kaschierung oder Lackierung dem Schichtverbund zugefügt werden. Die flache, flexible Umfassungseinheit kann auch aus einem Kunststoff, insbesondere einer Kunststofffolie, bestehen. Die Umfassungseinheit kann ein ein- oder mehrblättriges Erzeugnis sein. Dieses mehrblättrige Erzeugnis kann gebunden, geheftet oder geklebt sei. Die Umfassungseinheit kann unterschiedliche Flächendimensionen und -geometrien aufweisen und z. B. polygonal oder rund sein oder kombinierte Formen aufweisen. Die Umfassungseinheit ist bevorzugt rechteckförmig ausgebildet. Die Umfassungseinheit kann insbesondere auch die Form eines Streifens haben.

Die Umfassungseinheit ist bevorzugt ein entlang einer Biegelinie gebogener oder gefalzter, flächiger Artikel, wie z. B. ein Bogen, welcher zwei durch die Biegelinie begrenzte Umfassungsabschnitte ausbildet. Insbesondere kann die Umfassungseinheit aber auch aus mindestens einem oberen und mindestens einem unteren Deckblatt bestehen, welche an mindestens einer Stelle miteinander verbunden sind. Die Deckblätter sind beispielsweise direkt und/oder über Verbindungsteile miteinander verbunden. Die Deckblätter und gegebenenfalls auch die Verbindungsteile sind durch kleben und/oder heften miteinander verbunden. Die Umfassungseinheit kann insbesondere mehrteilig ausgebildet sein, etwa durch mehrere miteinander verklebte Teile und/oder durch mehrere zusammengeheftete Teile.

Alternativ kann die Umfassungseinheit auch auf allen Seiten geschlossen oder auf allen Seiten offen sein und beispielsweise aus einem oberen und/oder unteren Deckblatt oder einem Umschlag bestehen.

In einer weiteren bevorzugten Ausführungsform weist die Zustelleinheit und/oder die Umfassungseinheit eine Empfängeridentifikation auf.

Durch eine Empfängeridentifikation auf der Zustelleinheit und/oder der Umfassungseinheit kann der Empfänger der Artikel in der Zustelleinheit bzw. der Empfänger der Zustelleinheit (welcher ggf. nicht mit einem Empfänger der Artikel übereinstimmen muss) einfach und rasch ermittelt werden. Dies erleichtert, vereinfacht und beschleunigt das Austragen.

Alternativ kann die Zustelleinheit und/oder die Umfassungseinheit auch keine Empfängeridentifikation aufweisen oder andere Informationen als eine Empfängeridentifikation aufweisen, beispielsweise Hinweise auf besonders zu behandelnde Zustelleinheiten bzw. davon umfasste Artikel wie etwa Eilzustellung, Einschreiben, Zerbrechlich, Persönlich oder Alternativempfänger.

In einer weiteren bevorzugten Ausführungsform umfasst die Befülleinrichtung eine Verstellvorrichtung für die Austragetasche. Die Verstellvorrichtung verändert entsprechend einem Füllstand der Austragetasche die Position der Austragetasche.

Die Verstellvorrichtung kann durch das Verändern der Position der Austragetasche sicherstellen, dass die Austragetasche und der Abgabepunkt der Fördervorrichtung in einer Position relativ zueinander angeordnet sind, welche ein besonders rasches, materialschonendes und genaues Stapeln der Zustelleinheiten in der Austragetasche ermöglicht. Das Verändern der Position erfolgt dem Füllstand der Austragetasche entsprechend, so dass ein Stapelende in der Austragetasche, auf welches eine weitere Zustelleinheit gestapelt werden soll, sich in einer besonders gut zum Stapeln geeigneten Position relativ zum Abgabepunkt befindet. Durch ein solches angepasstes Verändern der Position des Stapelendes durch die Verstellvorrichtung können Zustelleinheiten von unterschiedlicher Dicke sicher und materialschonend aufeinander gestapelt werden. Die Verstellvorrichtung kann die Austragetasche horizontal und/oder vertikal verschieben, kippen und/oder drehen oder eine oder mehrere dieser Bewegungen einzeln oder kombiniert aufeinander folgend ausführen. Die Geschwindigkeit der Veränderung der Position der Austragetasche durch die Verstellvorrichtung kann stark variieren. Die Veränderung der Position kann kontinuierlich oder in Schritten erfolgen.

Die Verstellvorrichtung kann ein Teil des Stapelmechanismus sein. Insbesondere kann der Stapelmechanismus die Verstellvorrichtung und ein bewegliches Fördervorrichtungsende umfassen. Der Stapelmechanismus kann die Zustelleinheiten in einen oder mehrere in der Austragetasche ausgebildeten Stauräume stapeln, und zwar in einer beliebigen Reihenfolge. Bevorzugt wird ein einzelner Stauraum, welcher in der Austragetasche ausgebildet ist und auch als Lagerraum oder Innenraum bzw. Fach der Tragetasche bezeichnet werden kann, sukzessiv von einer Wand des Stauraums zur anderen mit Zustelleinheiten ausgefüllt. Das Stapeln der flächigen Artikel erfolgt dabei in Stapelrichtung, welche insbesondere im Wesentlichen in Schwerkraftrichtung weist. Mit Stapelrichtung wird die Richtung bezeichnet, in welcher sich ein Stapel durch das Stapeln ausdehnt. Und eine Richtung weist im Wesentlichen in eine Bestimmungsrichtung, wenn die Richtung weniger als maximal 80 Grad von der Bestimmungsrichtung abweicht.

Alternativ kann die Befülleinrichtung auch ohne Verstellvorrichtung vorgesehen werden, oder die Befülleinrichtung kann auch über mehrere Verstellvorrichtungen verfügen. Die Verstellvorrichtung muss auch nicht die Position der Austragetasche verändern, sondern kann auch die Position von anderen Teilen der Befülleinrichtung, des Befüllsystems und/oder der Zustelleinheiten selber verändern. Beispielsweise kann eine Verstellvorrichtung die Zustelleinheiten von einem Abgabepunkt der Fördervorrichtung an einen definierten Ort in der Austragetasche bewegen. Eine oder mehrere Verstellvorrichtungen können auch von anderen Teilen des Befüllsystems als von der Befülleinrichtung umfasst werden.

In einer weiteren bevorzugten Ausführungsform umfasst die Befülleinrichtung eine Steuerungsvorrichtung, welche den Stapelmechanismus derart steuert, dass die Zustelleinheiten als Artikelstrom durch eine erste Öffnung der Austragetasche in einen Stauraum der Austragetasche eingebracht werden und die eingebrachten Zustelleinheiten im Stauraum einen Stapel bilden.

Der Stapelmechanismus der Befülleinrichtung kann verschiedene Teile der Befülleinrichtung umfassen, insbesondere ein bewegliches Fördervorrichtungsende und/oder eine Verstellvorrichtung. Der Stapelmechanismus kann insbesondere die Position des Abgabepunkts, die Position einer Zustelleinheit, die Position einer Austragetasche und/oder die Position eines Stapels aus Zustelleinheiten verändern. Der Stapelmechanismus wird durch eine Steuerungsvorrichtung derart gesteuert, dass der Stapelmechanismus einen Artikelstrom in die Austragetasche einbringt und stapelt. Der Artikelstrom kann dabei insbesondere aus vereinzelten Zustelleinheiten und/oder Zustelleinheiten in Schuppen und/oder in Teilstapeln bestehen. Ein Artikelstrom, welcher Artikel in Schuppen umfasst, wird Schuppenstrom genannt.

Der Artikelstrom kann beispielsweise auch aus Schuppensegmenten bestehen, also aus einzelnen Schuppen mit zwischen den Schuppen angeordneten Unterbrüchen bzw. Lücken im Schuppenstrom. Insbesondere können die Schuppensegmente verdichtet sein, d.h. dass in Förderrichtung betrachtet liegende Enden der in Förderrichtung unmittelbar aufeinander folgenden Artikel im verdichteten Schuppensegment kürzere Abstände aufeinander aufweisen als entsprechende Enden der Artikel in einem unverdichteten Schuppensegment bzw. einem unverdichteten Schuppenstrom. Verdichtete Schuppensegmente weisen gegenüber unverdichteten Schuppensegmenten den Vorteil auf, dass die verdichteten Schuppensegmente zum Fördern einer vorgegebenen Anzahl von Artikeln pro vorgegebener Zeit mit einer geringeren Geschwindigkeit gefördert werden können als unverdichtete Schuppen. Durch eine geringere Geschwindigkeit des Förderns eines Schuppensegments kann beispielsweise das Stapeln der Artikel in der Austragetasche ebenfalls mit einer geringeren Geschwindigkeit erfolgen, was ein besonders genaues, besonders sicheres und/oder besonders materialschonendes Stapeln erlaubt.

Die Lücken zwischen Schuppensegmenten können insbesondere dazu genutzt werden, Trennmittel, Boden- und/oder Deckblätter, Gegenstände mit Zusatzinformation über das Schuppensegment und andere Gegenstände zwischen die Schuppensegmente einzubringen. Vorrichtungen und Verfahren zum Einbringen von Gegenständen können die Lücken entsprechend benutzen. Die Lücke kann etwa auch genutzt werden, um Schuppensegmente gezielt verschiedenen Verarbeitungsschritten zuzuführen, beispielsweise um einzelne Schuppensegmente verschiedenen Befülleinrichtungen zuzuführen.

Das Stapeln in der Austragetasche kann in verschiedenen Stapelschritten erfolgen, indem etwa einzelne Zustelleinheiten oder auch mehrere Zustelleinheiten zusammen (z.B. in Form einer Schuppe, eines Schuppensegments oder als Teilstapel) aufeinander gestapelt werden. Durch die Steuerungsvorrichtung ist die Befülleinrichtung besonders vielseitig einsetzbar, und das Befüllen der Austragetaschen kann auch durch präzis ausgeführte Schritte beschleunigt und/oder besonders materialschonend für die Zustelleinheit und/oder die Austragetasche ausgeführt werden.

Die Steuerungsvorrichtung kann beispielsweise zwischen verschiedenen Geschwindigkeiten und/oder verschiedenen Stapelschritten wechseln, so dass beispielsweise einzelne Zustelleinheiten, Schuppen und Teilstapel in beliebiger Kombination und Reihenfolge aufeinander gestapelt werden können. In einer Schuppe ist der Bund der Zustelleinheit in Förderrichtung bevorzugt vorlaufend angeordnet. Der Bund einer Zustelleinheit kann innerhalb der Schuppe oberhalb oder unterhalb einer in der Schuppe in Förderrichtung unmittelbar vorlaufenden Zustelleinheit angeordnet sein. Beim Stapeln von Teilstapeln liegt der Bund der Zustelleinheiten bevorzugt in Förderrichtung.

Die Steuerungsvorrichtung kann insbesondere über Informationen aus Sensoren oder Sensorsystemen verfügen und die Befülleinrichtung mindestens teilweise abhängig von diesen Information steuern. Als Sensoren oder Sensorsysteme können beispielsweise optische Sensoren, Kameras ohne oder mit Auswertesystem, Wiegevorrichtungen, mechanische Zähleinheiten oder Taster dienen. Die von den Sensoren oder Sensorsystemen erfassten Messgrössen können beispielsweise die Stapelhöhe des Stapels, die Füllhöhe und/oder das Gewicht der befüllten Austragetasche, das Gewicht und/oder die geometrischen Ausmasse und insbesondere die Dicke der Zustelleinheiten sein. Ebenso können die Sensoren oder Sensorsysteme die Anzahl Zustelleinheiten in der Austragetasche, in der Befülleinrichtung, im Befüllsystem oder in einem Teilstapel oder einem Schuppensegment erfassen. Auch die Empfängeridentifikation kann beispielsweise von Kameras mit Auswertesystemen erfasst werden. Durch das Erfassen der Empfängeridentifikation kann eine Qualitätsprüfung erfolgen. Zustelleinheiten mit unpassender Empfängeridentifikation können ermittelt werden, und diese Information kann vom Befüllsystem und insbesondere von der Befülleinrichtung angezeigt werden. Alternativ oder ebenfalls kann die Austragetaschen mit dieser Information versehen werden.

Die Zustelleinheiten werden insbesondere durch eine Fördervorrichtung in einem Schuppenstrom durch eine erste Öffnung der Austragetasche in einen Stauraum der Austragetasche eingebracht. Das Stapeln der Zustelleinheiten erfolgt bevorzugt in einer ganz bestimmten Reihenfolge. Im Fall der Schuppe wird die Reihenfolge bevorzugt beim Erstellen der Schuppe bestimmt, also vor dem Stapeln, so dass die Schuppe bereits in der gewünschten Reihenfolge in den Stauraum eingebracht wird. Die Austragetasche kann mehrere Stauräume aufweisen, in welchen die Zustelleinheiten sukzessiv oder in einer beliebigen Reihenfolge gestapelt werden.

Alternativ kann das Befüllsystem die Steuerungsvorrichtung auch umfassen, ohne dass die Steuerungsvorrichtung von der Befülleinrichtung umfasst wird. Die Steuerungsvorrichtung kann auch ausserhalb des Befüllsystems vorgesehen sein und beispielsweise mit weiteren Steuervorrichtungen zusammenwirken. Die Steuerungsvorrichtung kann auch nur teilweise vom Befüllsystem bzw. der Befülleinrichtung umfasst werden. Zudem kann die Steuerungsvorrichtung auch mehr als nur den Stapelmechanismus steuern. Die Steuerungsvorrichtung kann insbesondere auch verschiedene Teile des Stapelmechanismus separat oder in verschiedenen Kombinationen steuern. Die Zustelleinheiten können durch verschiedene Öffnungen in die Austragetasche eingebracht und dort gestapelt werden. Der Bund der Zustelleinheit kann vor und/oder beim Stapeln sowohl vorlaufend als auch nachlaufend angeordnet sein (oben oder unten).

In einer weiteren bevorzugten Ausführungsform umfasst die Befülleinrichtung einen Kennzeichnungsmechanismus, welcher während dem Stapeln oder durch die Art des Stapelns der Zustelleinheiten die Austragetasche mit Zusatzinformation versieht.

Der Kennzeichnungsmechanismus versieht die Austragetasche während dem oder durch die Art des Stapelns mit Zusatzinformation, indem beispielsweise die Austragetasche mit mindestens einem Kennzeichen (etwa mindestens eine durch Farbe und/oder Form unterscheidbare Markierung, ein oder mehrere Symbole und/oder Ziffern, Buchstaben etc. in beliebiger Kombination oder aber auch Bilder, Wörter und/oder ganze Beschreibungen) versehen wird. Beispielsweise kann das mindestens eine Kennzeichen auf Papier gedruckt und in eine Tasche mit Sichtfenster eingebracht werden. Oder der Kennzeichnungsmechanismus funktioniert beispielsweise derart, dass eine bestimmte Zustelleinheit (oder ein Teil davon) während des Stapelns auf eine Weise positioniert wird, dass von der Aussenseite der Austragetasche aus diese Zustelleinheit oder deren Teil ersichtlich ist (etwa durch ein Sichtfenster) und daraus auf den Inhalt der Austragetasche geschlossen werden kann. Der Kennzeichnungsmechanismus kann durch die Steuerungsvorrichtung gesteuert sein.

Die Zusatzinformation kann beispielsweise eine oder mehrere Zustelladressen, Umfang des Inhalts der Austragetasche, Bereich der Zustelladressen, Zustellkreise oder Austragerouten und/oder andere Informationen wie etwa Gewicht und/oder Art und/oder Menge des Inhalts der Austragetasche, Name des Austrägers und/oder besondere Anweisungen an den Austräger und/oder Empfänger umfassen. Der Vorteil der Zusatzinformation besteht darin, dass die Austragetasche einfach und rasch identifizierbar ist und auf diese Weise das Austragen der Zustelleinheiten erleichtert.

Alternativ kann die Austragetasche auch schon vor dem Befüllen durch die Befülleinrichtung bereits permanent oder temporär mit Zusatzinformation versehen sein, und/oder die Austragetasche wird vor und/oder nach dem Befüllen durch die Befülleinrichtung mit Zusatzinformation versehen. Zudem kann das Befüllsystem den Kennzeichnungsmechanismus auch umfassen, ohne dass der Kennzeichnungsmechanismus von der Befülleinrichtung umfasst wird. Der Kennzeichnungsmechanismus kann auch ausserhalb des Befüllsystems vorgesehen sein. Der Kennzeichnungsmechanismus kann auch nur teilweise vom Befüllsystem bzw. der Befülleinrichtung umfasst werden.

In einer weiteren bevorzugten Ausführungsform umfasst das Befüllsystem einen Schuppenteiler und in Förderrichtung nachfolgend angeordnet mindestens eine Befülleinrichtung.

Ein Schuppenteiler teilt einen Schuppenstrom in Schuppensegmente auf, zwischen welchen Lücken liegen. Insbesondere können dabei verdichtete Schuppensegmente erstellt werden. Die Vorteile einer Verarbeitung von Schuppensegmenten und insbesondere von verdichteten Schuppensegmenten sind weiter oben bereits ausgeführt, ebenfalls die Vorteile von Lücken. Ist die mindestens eine Befülleinrichtung dem Schuppenteiler in Förderrichtung nachfolgend angeordnet, so können die Schuppensegmente einfach, rasch und effizient direkt weiterverarbeitet werden. Bei mehreren Befülleinrichtungen im Befüllsystem können von einem Schuppenteiler verschiedene Schuppensegmente verschiedenen Befülleinrichtungen zugeführt werden, was eine vielseitigere Verwendung des Befüllsystem erlauben und die Befüllgeschwindigkeit des Befüllsystems erhöhen kann.

Alternativ kann das Befüllsystem auch keinen, oder aber auch mehrere Schuppenteiler umfassen. Insbesondere kann im Befüllsystem - oder auch ausserhalb des Befüllsystems - der Schuppenstrom oder die Schuppensegmente auch auf eine andere Weise als durch einen Schuppenteiler verdichtet werden. Beispielsweise etwa durch ein erstes Förderband und ein in Förderrichtung nachfolgendes zweites Förderband, wobei das erste Förderband den Schuppenstrom bzw. das Schuppensegment mit einer höheren Geschwindigkeit fördert als das zweite Förderband. Der Schuppenteiler kann den Schuppenstrom auch in Schuppensegmente aufteilen, ohne dass die Schuppensegmente verdichtet sind und die Schuppensegmente gleich dicht wie im Schuppenstrom oder auch weniger dicht ausbilden.

Lücken zwischen Schuppensegmenten können ebenfalls auf eine andere Weise als durch einen Schuppenteiler ausgebildet werden. Das Ausbilden der Lücken kann im oder auch ausserhalb des Befüllsystems erfolgen. Dazu kann beispielsweise ein Teil des Schuppenstroms gegenüber einem anderen Teil des Schuppenstroms positiv oder negativ beschleunigt werden, wodurch eine Lücke entsteht. Das Ausbilden von Lücken zwischen Schuppensegmenten und das Verdichten des Schuppenstroms und/oder der Schuppensegmente kann unabhängig voneinander oder mindestens teilweise gemeinsam erfolgen. Das Ausbilden von Lücken zwischen Schuppensegmenten und das Verdichten des Schuppenstroms und/oder der Schuppensegmente kann durch gleiche oder mindestens teilweise verschiedene Teile des Befüllsystems (oder durch nicht vom Befüllsystem umfasste Vorrichtungen) erfolgen. Ausserdem kann die Befülleinrichtung auch anders als in Förderrichtung dem Schuppenteiler nachfolgend angeordnet sein, beispielsweise in Förderrichtung dem Schuppenteiler vorlaufend angeordnet, oder etwa auch darunter.

Im Rahmen der Erfindung wird auch eine Austragetasche zur Verwendung in einem der oben beschrieben erfindungsgemässen Befüllsystem beansprucht. Dabei umfasst die Austragetasche Teile, welche aus flexiblem Material ausgebildet sind.

Die Austragetasche ist dabei als Tasche, Sack, Tornister oder generell als ein Transportbehälter ausgebildet, welche mindestens teilweise aus flexiblem Material besteht. Besonders vorteilhaft besteht das flexible Material aus einem textilen Flächengebilde, insbesondere aus einem Gewebe. Das textile Flächengebilde kann natürliche oder künstliche Fasern oder ein Gemisch davon enthalten. Die Wände des Stauraumes der Austragetasche bestehen bevorzugt vollständig aus einem textilen Material.

Eine mindestens teilweise flexible Austragetasche hat den Vorteil, dass sie sich der Form und/oder der Menge des Inhalts und/oder den Einwirkungen auf die Austragetasche von Aussen anpassen kann, beispielsweise durch eine Anpassung der Form der Tasche an den Austräger beim Tragen. Die Austragetasche kann beispielsweise auch beim Befüllen bei Bedarf mindestens teilweise vergrössert bzw. beim Austragen wieder verkleinert werden (insbesondere auch in leerem Zustand in eine kompakte Form gebracht werden, z.B. durch Falten oder Rollen). Die erhöht beispielsweise den Komfort und/oder die Ergonomie im Umgang mit der Austragetasche während des Austragens, erlaubt eine bessere Anordnung und Gewichtsverteilung der Austragetasche in Bezug auf den Austräger und erhöht die Beweglichkeit des Austrägers beim Austragen, beispielsweise durch ein an die Menge des Inhalts angepasstes Aussenvolumen der Austragetasche.

Ein Anpassen der Grösse der Austragetasche ist insbesondere auch bei variierendem Volumen der Zustelleinheiten bzw. der flächigen Artikel besonders vorteilhaft, wenn beispielsweise eine Austragetasche mindestens, genau oder maximal eine bestimmte Anzahl von Zustelleinheiten mit variierenden Volumina enthalten soll. Insbesondere ist dies der Fall, wenn eine Austragetasche zum Austragen von Post verwendet wird und die Austragetasche immer denselben im Voraus definierten Teil einer Austrageroute enthalten soll. Die Grösse der Austragetasche kann dann einem täglich variierenden Volumen der auf diesem Teil der Austrageroute auszutragenden Post angepasst werden und umfasst immer alle Zustelleinheiten für den entsprechenden Teil der Austrageroute. Dies ermöglicht ein ergonomisches und besonders effizientes Austragen der Post.

Geeignete Textilien sind leicht erhältlich und kostengünstig, können über spezielle Eigenschaften wie etwa Dichtheit gegenüber Fluiden, hohe Reiss- und/oder Abriebfestigkeit und/oder eine definierte Flexibilität bzw. Dehnbarkeit verfügen. Durch die flexiblen Teile und gegebenenfalls auch in Kombination mit nichtflexiblen Teilen ist die Austragetasche vielseitig verwendbar, kostengünstig und leicht. Die Austragetasche kann für einen einmaligen Gebrauch vorgesehen sein, mit Vorteil lässt sie sich aber auch mehrmals brauchen. Typischerweise ist die Austragetasche für eine Last von 3-20 kg ausgelegt und im Wesentlichen nicht grösser als 100 x 60 x 50 cm. Ist die Austragetasche nicht selbsttragend, so kann die Befülleinrichtung Mittel zur Positionierung, zum Ausbilden und Offenhalten des Stauraumes vorsehen.

In einer bevorzugten Ausführungsform weist die Austragetasche mindestens einen Schulterriemen und/oder einen Traggriff auf.

Durch mindestens einen Schulterriemen und/oder einen Traggriff bzw. einen Henkel kann die Austragetasche besonders gut ergriffen, gehalten, transportiert bzw. getragen, befestigt und manipuliert werden. Weitere Riemen, Bänder und/oder Befestigungsvorrichtungen wie etwa Verschlusssysteme oder Verbindungsmöglichkeiten mit anderen Austragetaschen, Aufhängevorrichtungen, Gurten, Tragsystemen etc. können die Austragetasche noch vielseitiger einsetzbar machen, insbesondere für die für den Schulterriemen und den Traggriff genannten Zwecke.

Alternativ kann die Austragetasche auch ohne Schulterriemen und/oder Traggriff oder mit anderen Vorrichtungen ausgebildet sein, insbesondere mit anderen Vorrichtungen zum Transportieren, Halten und/oder Tragen der Austragetasche.

In einer weiteren bevorzugten Ausführungsform weist die Austragetasche zum Entnehmen der flächigen Artikel aus der Austragetasche mindestens eine zweite Öffnung auf.

Weist die Austragetasche eine zweite Öffnung auf, durch welche die flächigen Artikel bzw. Zustelleinheiten entnommen werden können, so müssen die Zustelleinheiten nicht in eine Richtung aus der Austragetasche entnommen werden, welche entgegengesetzt zu der Richtung des Einbringens der Zustelleinheit zum Stapeln in der Austragetasche steht. Die Zustelleinheiten können durch eine zweite Öffnung auch in einer beliebig gewählten Richtung aus der Austragetasche entnommen werden. Dies ist insbesondere dann von Vorteil, wenn die Zustelleinheiten mit dem Bund voraus in die Austragetasche eingebracht und danach wieder mit dem Bund voraus der Austragetasche entnommen werden können. Auf diese Weise ist der Bund immer in Förderrichtung ausgerichtet, was eine besonders einfache, rasche und effiziente Bearbeitung erlaubt.

Alternativ kann die Austragetasche aber auch nur eine Öffnung aufweisen.
In einer weiteren bevorzugten Ausführungsform liegen die erste und die zweite Öffnung der Austragetasche auf entgegen gesetzten Seiten der Austragetasche. Insbesondere sind die erste und zweite Öffnung derart angeordnet, dass mindestens ein Stauraum der Austragetasche bei geöffneter erster und zweiter Öffnung im Wesentlichen einen durch die Austragetasche hindurch tretenden Durchgang bildet.

Wenn die erste und zweite Öffnung der Austragetasche auf entgegen gesetzten Seiten der Austragetasche liegen, so können die Zustelleinheiten in derselben Richtung in die Austragetasche eingebracht, gestapelt und auch entnommen werden - beispielsweise mit dem Bund voraus. Dies hat den grossen Vorteil, dass die bevorzugte Ausrichtung der Zustelleinheit, welche bei nach vorne gerichtetem Bund am einfachsten und effizientesten handzuhaben sind, sowohl vor und beim als auch nach dem Stapeln gewährleistet ist. Bevorzugt erlauben die erste und/oder zweite Öffnung der Austragetasche einen Zugriff auf die gesamte Breite des mindestens einen Stauraums, was das Einbringen und Entnehmen der Zustelleinheiten erleichtert.

Alternativ kann die Austragetasche auch nur eine Öffnung aufweisen, oder die zweite Öffnung liegt an einer anderen Stelle als gegenüber der ersten Öffnung. Die gegenüberliegenden Öffnungen können auch verschieden gross oder versetzt angeordnet sein.

In einer weiteren bevorzugten Ausführungsform weist die erste und/oder zweite Öffnung der Austragetasche mindestens für einen Teil der Öffnung einen wieder verschliessbaren Verschluss auf. Der wieder verschliessbare Verschluss kann insbesondere Druckknöpfe, einen Reiss- oder Klettverschluss oder Bänder, Schnüre oder Laschen umfassen.

Ein Verschluss bietet dem Inhalt der Tragetasche beispielsweise Schutz vor Herausfallen sowie Schutz vor Witterung, Stössen, Schmutz und anderen Ausseneinflüssen und kann auch Diebstahl einzelner oder mehrerer Zustelleinheiten mindestens erschweren wenn nicht sogar verhindern. Zudem kann die Austragetasche vielseitiger eingesetzt werden; beispielsweise können die Zustelleinheiten besonders einfach, sicher und ergonomisch durch eine erste Öffnung in die Austragetasche eingebracht und gestapelt werden, wenn andere Öffnungen verschlossen sind. Nach dem Verschliessen der ersten Öffnung durch einen Verschluss kann die Austragetasche ergonomisch und sicher bewegt und transportiert werden, beispielsweise auch mit der ersten Öffnung im Wesentlichen in Richtung der Schwerkraft liegend, also insbesondere unterhalb der gestapelten Zustelleinheiten.

Ein weiterer Vorteil von wieder verschliessbaren Verschlüssen ist die Möglichkeit, die Austragetasche mehrfach verwenden zu können. Dies senkt Kosten, spart Ressourcen und vermindert Abfall.

Alternativ kann auch keine Öffnung oder eine beliebige Anzahl von Öffnungen der Tragetasche einen bzw. keinen Verschluss aufweisen, und der Verschluss muss auch nicht wieder verschliessbar sein sondern kann nur einmalig funktionieren. Eine Öffnung kann auch ohne Verschluss verschlossen werden, beispielsweise durch verkleben oder verschweissen. Auch Elemente wie etwa eine Aussen- oder Innentasche, Riemen oder ein Gerüst für die Austragetasche, welche die Öffnung verschliessen, können denselben Zweck wie oben beschrieben erfüllen. Der wieder verschliessbare Verschluss kann auch durch Haken, Ösen, Schnappverschlüsse und andere Vorrichtungen ausgebildet sein. Die Tasche kann auch in dem Befüllsystem mindestens teilweise hergestellt, dann befüllt und gegebenenfalls anschliessend verschlossen und ggf. fertig gestellt werden.

Im Rahmen der Erfindung wird auch ein Verfahren zum Befüllen einer Austragetasche beansprucht. Das erfindungsgemässe Verfahren umfasst die folgenden Schritte: das Fördern von Zustelleinheiten in einem Artikelstrom, und das Stapeln der Zustelleinheiten aus dem Artikelstrom in einer Austragetasche. Beim Stapeln werden die Zustelleinheiten mit einer ersten Stirnseite voraus durch eine erste Öffnung der Austragetasche in die Austragetasche eingebracht werden und werden im Wesentlichen in Schwerkraftrichtung gestapelt.

Das Verfahren kann insbesondere durch ein weiter oben beschriebenes Befüllsystem ausgeführt werden und eignet sich insbesondere zum Befüllen von den weiter oben beschriebenen Austragetaschen. Die Vorteile des Befüllsystems und der Austragetaschen gelten auch für das Verfahren. Auch für die nachfolgenden bevorzugten Umsetzungen des Verfahrens gelten die Vorteile (und Alternativen), welche für die entsprechenden Vorrichtungen bzw. deren Teile und/oder die Austragetaschen gelten.

In einer bevorzugten Umsetzung des Verfahrens wird die Position der Austragetasche entsprechend einem Füllstand der Austragetasche verändert.

In einer weiteren bevorzugten Umsetzung des Verfahrens werden die Zustelleinheiten in einer zuvor definierten Reihenfolge gestapelt. Die zuvor definierte Reihenfolge kann insbesondere nach einem Zustellkreis, einer Zustellroute bzw. einer Zustelltour ausgerichtet sein. Alternativ kann die Reihenfolge auch nach Dringlichkeit, Grösse und/oder Gewicht der Zustelleinheiten oder anderen Grössen oder Bedingungen ausgerichtet sein.

In einer weiteren bevorzugten Umsetzung des Verfahrens wird während des Stapelns oder durch die Art des Stapelns die Austragetasche mit Zusatzinformation versehen.

### KURZE BESCHREIBUNG DER ZEICHNUNGEN

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine erste Ausführungsform einer Befülleinrichtung in Seitenansicht;
- Figur 2: eine zweite Ausführungsform einer Befülleinrichtung in Seitenansicht;
- Figur 3: eine dritte Ausführungsform einer Befülleinrichtung in Seitenansicht;
- Figur 4: eine vierte Ausführungsform einer Befülleinrichtung in Seitenansicht;
- Figur 5: eine Ausführungsform einer Austragetasche in perspektivischer Ansicht;
- Figur 6: eine weitere Ausführungsform einer Austragetasche in perspektivischer Ansicht;
- Figur 7: eine Ausführungsform eines erfindungsgemässen Befüllsystems in Seitenansicht.

Grundsätzlich sind in den Figuren gleiche Teile mit gleichen Bezugszeichen versehen. Sofern keine anderen Angaben die Richtungen präzisieren, gelten die Richtungsangaben für die abgebildete Figur genau gleich wie sie für eine Unterlage, auf welcher die Figur dargestellt ist: oben bezeichnet die Richtung, in welcher der obere Rand der Unterlage (z.B. des Blattes Papier) liegt, recht die Richtung, in welcher der rechte Rand der Unterlage liegt und so fort.

### WEGE ZUR AUSFÜHRUNG DER ERFINDUNG

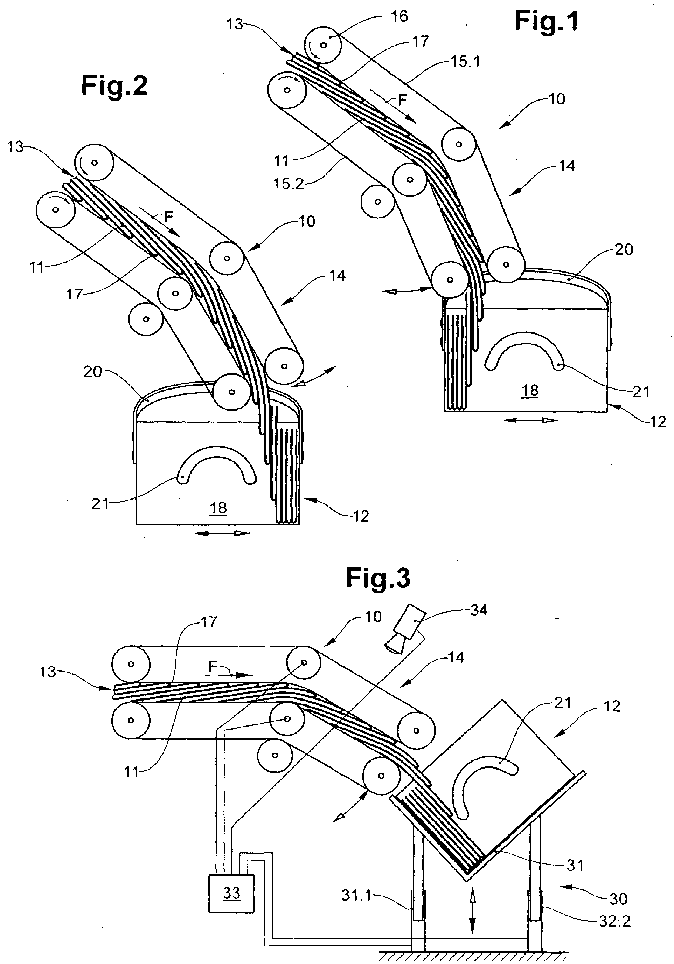

In Fig. 1 ist eine erste Ausführungsform einer Befülleinrichtung 10 in Seitenansicht dargestellt. Die Befülleinrichtung 10 bringt Zustelleinheiten 11 durch eine erste Öffnung einer Austragetasche 12 in die Austragetasche 12 ein und stapelt diese dort. Die Zustelleinheiten 11 werden von der Befülleinrichtung 10 als Schuppenstrom 13 in Richtung der Austragetasche 12 gefördert. Die Befülleinrichtung 10 weist an ihrem der Austragetasche 12 zugewandten Ende ein bewegliches Fördervorrichtungsende 14 auf. Das bewegliche Fördervorrichtungsende 14 ist um Drehpunkte beweglich gelagert, so dass das der Austragetasche 12 zugewandte Ende des beweglichen Fördervorrichtungsendes 14 im Wesentlichen entlang einer Stapelrichtung geschwenkt werden kann. Die Stapelrichtung verläuft in Fig. 1 im Wesentlichen horizontal, also im Wesentlichen senkrecht zur Schwerkraftrichtung. Stapel mit im Wesentlichen horizontaler Stapelrichtungen werden auch Stange genannt. Die Stapelrichtung von Fig. 1 wird weiter unten noch genauer beschrieben. Die Austragetasche 12 kann ebenfalls im Wesentlichen entlang der Stapelrichtung bewegt werden.

Die Befülleinrichtung 10 umfasst eine Fördervorrichtung in Form eines Doppelbandförderers mit einem oberen Förderband 15.1 und einem unteren Förderband 15.2. Die Förderbänder 15.1 und 15.2 sind über Umlenkrollen 16 geführt. Der zwischen den Förderbändern 15.1 und 15.2 geförderte Schuppenstrom 13 weist Zustelleinheiten 11 auf, deren geschlossene Enden als Bund 17 bezeichnet werden. Der Bund 17 der Zustelleinheiten 11 ist in Förderrichtung F der Befülleinrichtung 10 vorlaufend und liegt jeweils oben auf der in Förderrichtung F unmittelbar vorlaufenden Zustelleinheit 11, was als vorlaufend oben bezeichnet wird. In der in Fig. 1 dargestellten Ausführungsform der Befülleinrichtung 10 umfasst der Stapelmechanismus das bewegliche Fördervorrichtungsende 14 des Doppelbandförderers und eine Vorrichtung, welche die Austragetasche 12 im Wesentlichen entlang der Stapelrichtung bewegt. Die Förderbänder 15.1 und 15.2 sind um das bewegliche Fördervorrichtungsende 14 geführt und bilden am Ende des beweglichen Fördervorrichtungsendes 14 eine Abgabestelle für die Zustelleinheiten 11.

Der Schuppenstrom 13 wird vom Doppelbandförderer durch die Befülleinrichtung 10 in Richtung der Austragetasche 12 gefördert (die Förderrichtung F ist durch den Pfeil in Fig. 1 bezeichnet). Durch den Stapelmechanismus werden die Zustelleinheiten 11 in die Austragetasche 12 eingebracht und in ihr gestapelt. Die Stapelrichtung verläuft von einer Wand der Austragetäsche 12, welche einem geometrischen Mittelpunkt der Befülleinrichtung 10 näher liegt, zu einer Wand der Austragetasche 13, welche vom geometrischen Mittelpunkt der Befülleinrichtung 10 weiter entfernt liegt. Eine erste in die Austragetasche 12 eingebrachte Zustelleinheit 11 wird dabei in einem Stauraum 18 innerhalb der Austragetasche 12 an der Wand angeordnet, welche einem geometrischen Mittelpunkt der Befülleinrichtung 10 näher liegt. Dazu ist in Fig. 1 die Austragetasche 12 an einem Ende des der Austragetasche 12 für eine Bewegung zustehenden Bereichs angeordnet, welches vom geometrischen Mittelpunkt der Befülleinrichtung 10 weiter entfernt liegt, und das bewegliche Fördervorrichtungsende 14 befindet sich in einer entgegen der Stapelrichtung geschwenkten Stellung (dies ist durch die zwei Doppelpfeile in Fig. 1 in Richtung der leeren Pfeilköpfe dargestellt).

Durch weiteres Einbringen und Stapeln von Zustelleinheiten 11 im Schuppenstrom 13 wird der Stauraum 18 in Stapelrichtung zunehmend befüllt. Dabei bewegt sich die Austragetasche 12 im Wesentlichen zunehmend entgegen der Stapelrichtung, und das bewegliche Fördervorrichtungsende 14 schwenkt im Wesentlichen zunehmend in Stapelrichtung (dies ist durch die zwei Doppelpfeile in Fig. 1 in Richtung der vollen Pfeilköpfe dargestellt). Auf diese Weise sind die Austragetasche 12 und das bewegliche Fördervorrichtungsende 14 derart zueinander positioniert, dass die in die Austragetasche 12 eingebrachten Zustelleinheiten 11 an die für sie vorgesehene Position im Stapel zu liegen kommen.

Die in Fig. 2 dargestellte Seitenansicht einer zweiten Ausführungsform einer Befülleinrichtung 10 unterscheidet sich von der ersten Ausführungsform in Fig. 1 dadurch, dass die Zustelleinheiten 11 im Schuppenstrom 13 derart angeordnet sind, dass der Bund 17 jeweils unter der in Förderrichtung F unmittelbar vorlaufenden Zustelleinheit 11 liegt. Dies wird als vorlaufend unten liegender Bund 17 bezeichnet. Zudem ist die Stapelrichtung in Fig. 2 der Stapelrichtung in Fig. 1 entgegengesetzt. In Fig. 2 wird also im Gegensatz zu Fig. 1 die erste in die Austragetasche 12 eingebrachte Zustelleinheit 11 nicht an der Wand angeordnet, welche dem geometrischen Mittelpunkt der Befülleinrichtung 10 näher liegt, sondern an der Wand der Austragetasche 13, welche vom geometrischen Mittelpunkt der Befülleinrichtung 10 weiter entfernt liegt. Dazu ist in Fig. 2 die Austragetasche 12 an dem Ende des der Austragetasche 12 für eine Bewegung zustehenden Bereichs angeordnet, welches dem geometrischen Mittelpunkt der Befülleinrichtung 10 näher liegt, und das bewegliche Fördervorrichtungsende 14 befindet sich in einer entgegen der Stapelrichtung geschwenkten Stellung (dies ist durch die zwei Doppelpfeile in Fig. 2 in Richtung der vollen Pfeilköpfe dargestellt).

Ein weiteres Einbringen und Stapeln von Zustelleinheiten 11 in den Stauraum 18 erfolgt in entgegengesetzter Stapelrichtung, aber sonst analog zum selben Vorgang wie bei der Ausführungsform in Fig. 1. Dabei bewegt sich die Austragetasche 12 zunehmend entgegen der Stapelrichtung, und das bewegliche Fördervorrichtungsende 14 schwenkt zunehmend in Stapelrichtung (dies ist durch die zwei Doppelpfeile in Fig. 1 in Richtung der leeren Pfeilköpfe dargestellt). Die Austragetasche 11 in den Fig. 1 und 2 weist zudem einen Schulterriemen 20 sowie zwei Traggriffe 21 auf, wobei nur der eine Traggriff 21 sichtbar ist.

In Fig. 3 ist eine dritte Ausführungsform einer Befülleinrichtung 10 in Seitenansicht dargestellt. Wie in Fig. 1 ist der Bund 17 der Zustelleinheiten 11 im Schuppenstrom 13 vorlaufend oben angeordnet, und die Austragetasche 12 wird zunehmend in Stapelrichtung von der Wand, welche dem geometrischen Mittelpunkt der Befülleinrichtung 10 näher liegt, zu der Wand, welche vom geometrischen Mittelpunkt der Befülleinrichtung 10 weiter entfernt liegt befüllt. Im Unterschied zu Fig. 1 befindet sich die Austragetasche 12 in einer Verstellvorrichtung 30. Aus Gründen der Übersichtlichkeit ist die Austragetasche 12 in Fig. 3 ohne Schulterriemen 20 dargestellt.

Die Verstellvorrichtung 30 umfasst eine Halterung 31, in welcher die Austragetasche 12 positioniert wird. Die Halterung 31 ist derart gegenüber einem horizontalen Boden verkippt, dass die Austragetasche 12 auf der dem Schuppenstrom 13 zugewandten Seite schräg in Schwerkraftrichtung und auf der dem Schuppenstrom 13 zugewandten Seite schräg entgegen die Schwerkraftrichtung zeigt. Durch die verkippte Stellung der Austragetasche 12 können die im Schuppenstrom 13 eingebrachten Zustelleinheiten 11 im Wesentlichen in Schwerkraftrichtung auf die bereits in der Austragetasche 12 befindlichen Zustelleinheiten 11 gestapelt werden.

Im Gegensatz zur ersten Ausführungsform in Fig. 1 wird die Austragetasche 12 in der dritten Ausführungsform nicht im Wesentlichen entlang der Stapelrichtung und umgekehrt bewegt, sondern durch die Verstellvorrichtung 30 im Wesentlichen entlang der Schwerkraftrichtung und dazu entgegengesetzt, d.h. vertikal bewegt. Dazu verfügt die Verstellvorrichtung 30 über Beine 32.1 und 32.2, welche die Halterung 31 im Wesentlichen vertikal verfahren können. Um eine erste in die Austragetasche 12 eingebracht Zustelleinheit 11 an der Wand der Austragetasche 12 anzuordnen, welche dem geometrischen Mittelpunkt der Befülleinrichtung 10 näher liegt, wird die Halterung 31 zuerst entgegen der Schwerkraftrichtung verfahren und das bewegliche Fördervorrichtungsende 14 zuerst im Wesentlichen entgegen der Stapelrichtung verschwenkt (dies ist durch die zwei Doppelpfeile in Fig. 3 in Richtung der leeren Pfeilköpfe dargestellt). Mit zunehmender Stapelhöhe des Stapels bzw. Füllhöhe der Austragetasche 12 wird die Halterung 31 und mit ihr auch die Austragetasche 12 zunehmend in Schwer-kraftrichtung verfahren, und gleichzeitig wird das bewegliche Fördervorrichtungsende 14 zunehmend in Stapelrichtung verschwenkt (durch die zwei Doppelpfeile in Fig. 3 in Richtung der vollen Pfeilköpfe dargestellt).

Zur Steuerung des Stapelmechanismus, welcher in der in Fig. 3 dargestellten Ausführungsform das bewegliche Fördervorrichtungsendes 14 und die Verstellvorrichtung 30 umfasst, sind diese Teile der Befülleinrichtung 10 mit einer Steuerungsvorrichtung 33 verbunden. Die Steuerungsvorrichtung 33 steuert Teile der Befülleinrichtung 10 und stellt sicher, dass das Einbringen und Stapeln der Zustelleinheiten 11 problemlos abläuft. Die Stapelhöhe des Stapels bzw. die Füllhöhe der Austragetasche 12 wird durch in Fig. 3 nicht dargestellte optische Sensoren erfasst, und diese Information wird in die Steuerungsvorrichtung 33 geleitet. Eine ebenfalls nicht dargestellte Wiegevorrichtung erfasst ein totales Gewicht der Austragetasche 13 mitsamt Inhalt und leitet diese Information auch in die Steuerungsvorrichtung 33. Die Steuerungsvorrichtung 33 verarbeitet diese Information und steuert die entsprechenden Teile der Befülleinrichtung 10. Das Befüllen der Austragetasche 11 wird je nach Anforderung beispielsweise bei einem Erreichen eines maximalen Gewichts (in einem Beispiel bei einem totalen Gewicht von 6 kg) abgebrochen.

Die Steuerungsvorrichtung 33 ist neben den nicht dargestellten Sensoren zum Messen der Füllhöhe der Austragetasche 12 auch mit einem Kamerasystem 34 verbunden. Das Kamerasystem 34 besteht aus einer Kamera mit einer Auswerteeinheit. Das Kamerasystem 34 erfasst Bilder, wertet die Bilder aus und erfasst dadurch die Empfängeridentifikation und Anzahl der Zustelleinheiten 11. Die Steuerungsvorrichtung 33 kann auf diese Informationen zurückgreifen und dadurch unter Anderem kontrollieren, ob die Zustelleinheiten 11 in der richtigen Reihenfolge angeordnet und der richtigen Austragetaschen 12 zugeordnet sind. Dadurch ist eine Qualitätskontrolle und/oder Qualitätssicherung möglich. Das Kamerasystem 34 befindet sich über den Förderbändern und ist auf den Schuppenstrom 13 gerichtet. Gegebenenfalls kann das Kamerasystem 34 auch zwischen den Förderbändern angeordnet sein.

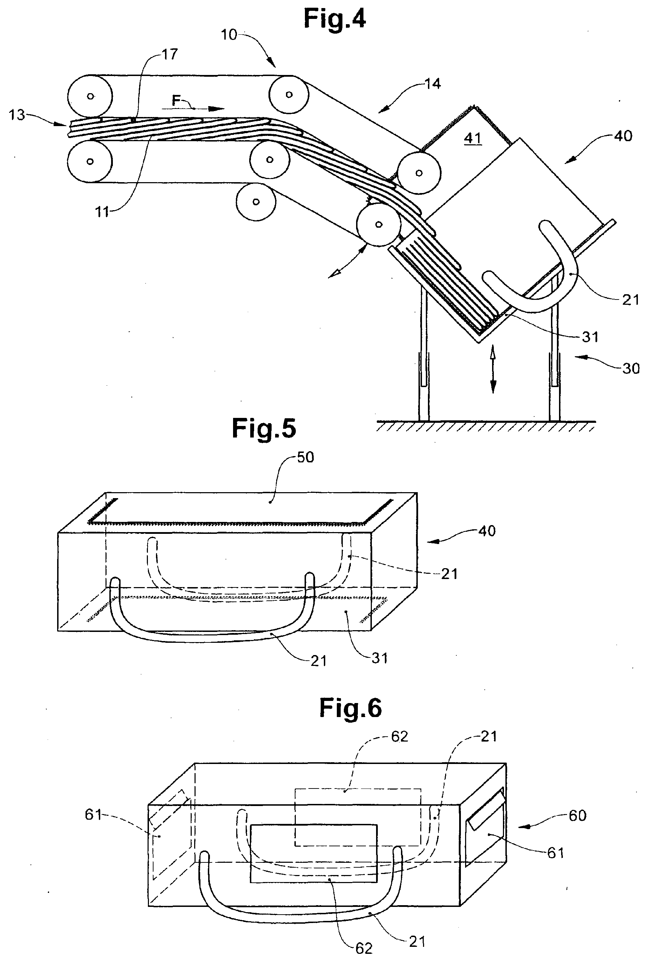

In Fig. 4 ist eine vierte Ausführungsform einer Befülleinrichtung 10 in Seitenansicht dargestellt. Die Befülleinrichtung 10 entspricht im Wesentlichen der Ausführungsform in Fig. 3. Der Unterschied zu Fig. 3 besteht darin, dass in Fig. 4 eine Austragetasche 40 anders in der Halterung 31 der Verstellvorrichtung 30 angeordnet ist als die Austragetasche 12 in Fig. 3. In den Fig. 1 - 3 wird die Austragetasche 12 durch die erste Öffnung befüllt, wobei die erste Öffnung oben an der Austragetasche 12 angeordnet ist, wenn sich die Austragetasche 12 in der Lage befindet, in welcher sie ausgetragen wird.

Bei der vierten Ausführungsform der Befülleinrichtung 10 werden Austragetaschen 40 befüllt, deren erste Öffnung unten an der Austragetasche 40 angeordnet ist (wenn sich die Austragetasche 40 in der Lage befindet, in welcher sie ausgetragen wird). In Fig. 4 wird die Austragetasche 40 ebenfalls durch die erste Öffnung durch die Befülleinrichtung 10 befüllt, und aus diesem Grund ist die Austragetasche 40 umgekehrt zur Lage, in welcher sie ausgetragen wird, auf der Halterung 31 angeordnet. Die erste Öffnung weist nun ebenfalls im Wesentlichen entgegen die Schwerkraftrichtung, und die Befülleinrichtung 10 befüllt die umgekehrt positionierte Austragetasche 40 wie in der Beschreibung zu Fig. 3 beschrieben. Die erste Öffnung kann durch eine Bodenklappe 41 und einen daran befestigten Reissverschluss wieder verschliessbar mit der Austragetasche 40 verschlossen werden.

In Fig. 5 ist eine perspektivische Ansicht einer Ausführungsform einer erfindungsgemässen Austragetasche 40 dargestellt. Diese Ausführungsform der Austragetasche 40 ist bereits in Fig. 4 dargestellt. Die Austragetasche 40 ist in Fig. 5 in der Lage gezeigt, in welcher sie ausgetragen wird. Die Bodenklappe 41 befindet sich auf der unteren Seite der Austragetasche 40. Die Traggriffe 21 sind beweglich mit der Austragetasche 40 verbunden und weisen unter Einfluss der Schwerkraft in Fig. 5 nach unten. Wenn beim Austragen die Handgriffe 21 zum Halten, Fixieren und/oder Transportieren der Austragetasche 40 verwendet werden, dann können die Handgriffe 21 auch nach oben oder in andere Richtungen weisen.

Die Austragetasche 40 weist an einer der Bodenklappe 41 gegenüberliegenden Seite, also an der oberen Seite der Austragetasche 40 eine Deckelklappe 50 auf. Wie die Bodenklappe 41 besteht auch die Deckelklappe 50 aus einem Teil der Austragetasche 40, welcher durch einen umlaufenden Reissverschluss mit der Austragetasche 40 wiederholt verbindbar und wiederholt von ihr trennbar ist. Sowohl Bodenklappe 41 als auch Deckelklappe 50 weisen einen Reissverschluss auf, welcher in Form eines U entlang oder in der Nähe von drei von vier Rändern der mit ihr verbindbaren Seite der Austragetasche 40 verläuft. Ist der Reissverschluss geöffnet, bleibt die Bodenklappe 41 bzw. die Deckelklappe 50 durch den verbleibenden vierten Rand mit der Austragetasche 40 verbunden und kann daran scharnierartig von der Austragetasche 40 weg gebogen werden.

Die Aussenmasse der Austragetasche 40 betragen 60 x 35 x 25 cm, und der Stauraum 18 ist so bemessen, dass Briefumschläge der Grösse C4 gestapelt darin Platz finden. Die Bodenklappe 41 und die Deckelklappe 50 sind an den beiden Seiten mit der grössten Oberfläche angeordnet, so dass der Innenraum 18 einfach und gut zugänglich ist.

Fig. 6 zeigt eine weitere Ausführungsform einer erfindungsgemässen Austragetasche 60 in perspektivischer Ansicht. Die Austragetasche 60 in Fig. 6 entspricht im Wesentlichen der Austragetasche 40 in Fig. 5 und ist in Fig. 6 gleich wie in Fig. 5 in der Lage dargestellt, in welcher sie ausgetragen wird. Auf eine Darstellung von Verschlussmechanismen und Öffnungen wurde aus Gründen der Übersichtlichkeit in Fig. 6 verzichtet.

In Fig. 6 sind verschiedene Wege dargestellt, durch welche die Austragetasche 60 mit Zusatzinformationen versehen werden kann. Dazu weist die Austragetasche 60 an den Seiten, auf welchen sich keine erste oder zweite Öffnung befindet, Taschen 61 und/oder Sichtfenster 62 auf. Die Taschen 61 weisen eine mindestens teilweise transparente Aussenseite auf, durch welche der Inhalt der Taschen 61 bzw. der Austragetasche 60 erkennbar ist. Durch Einbringen von markierten Objekten wie etwa beschrifteten Papierstücken in die Taschen 61 kann also die Austragetasche 60 mit aus den Markierungen entnehmbarer Zusatzinformation versehen werden, welche direkt an der Aussenseite der Taschen 61 und somit an der Austragetasche 60 erkennbar ist.

Auch die Sichtfenster 62 erlauben es, die Austragetasche 60 mit Zusatzinformation, beispielsweise über den Inhalt der Austragetasche, zu versehen. Die Sichtfenster 62 sind mindestens teilweise transparent und erlauben einen Einblick in die Austragetasche 60 in Richtung des Stauraums 18. Wird oder ist der Inhalt des Stauraums 18 mit Markierungen versehen, welche den Sichtfenstern 62 zugewandt sind, oder wird bzw. ist mindestens ein markiertes Objekt wie etwa ein beschriftetes Papierstück im Stauraum 18 hinter den Sichtfenstern 62 angeordnet, so ist die Austragetasche 60 mit aus den Markierungen entnehmbarer Zusatzinformation versehen.

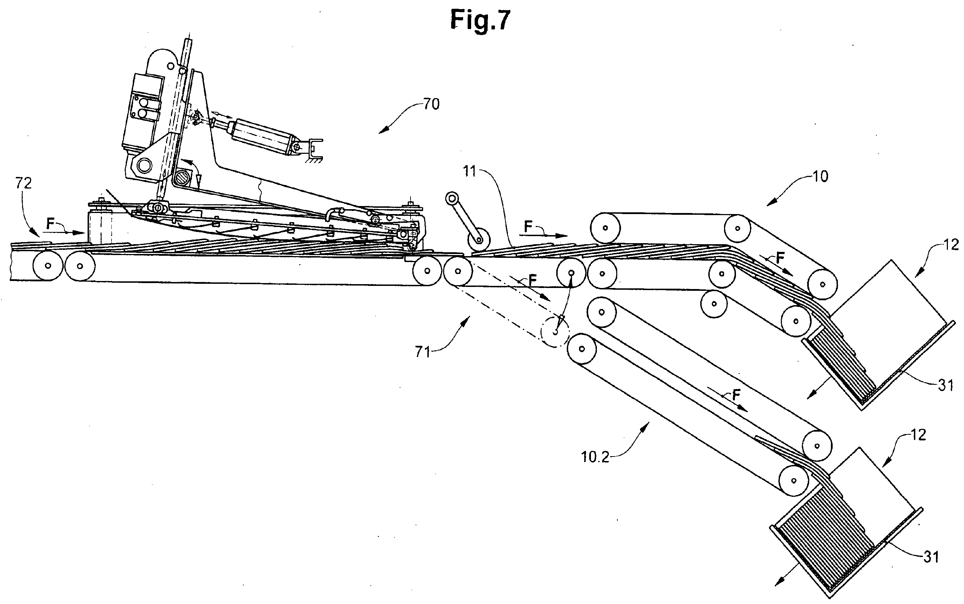

Fig. 7 stellt eine Ausführungsform eines erfindungsgemässen Befüllsystems in Seitenansicht dar. Das Befüllsystem umfasst zwei Befülleinrichtungen 10 und 10.2, eine Förderbandweiche 71 und einen Schuppenteiler 70. Die Befülleinrichtung 10 in Fig. 7 ist im Wesentlichen in Aufbau und Funktion der Befülleinrichtung 10 in Fig. 3 ähnlich. In Fig. 7 ist die Befülleinrichtung 10 in Förderrichtung F unmittelbar nachfolgend an eine Förderbandweiche 71 angeordnet. Die Förderbandweiche 71 wiederum ist in Förderrichtung F unmittelbar nachfolgend an einen Schuppenteiler 70 angeordnet. Der Schuppenteiler 70 teilt einen durch ihn durchlaufenden Schuppenstrom 72 in einzelne Schuppensegmente auf, welche über die Förderbandweiche 71 entweder in die Befülleinrichtung 10 oder in ein unter der Befülleinrichtung 10 angeordneten Befülleinrichtung 10.2 gefördert werden. Die Förderbandweiche 71 nutzt dabei eine Lücke zwischen zwei Schuppensegmenten, um zwischen einer Zuführung in die Befülleinrichtung 10 und einer Zuführung in die Befülleinrichtung 10.2 zu wechseln. Der Bund 17 der Zustelleinheiten 11 im Schuppenstrom 72 liegt wie der Schuppenstrom 13 in Fig. 3 vorlaufend oben, und auch die Stapelrichtung in den Austragetaschen 12 sind in Fig. 7 identisch mit der Stapelrichtung in der Austragetasche 12 in Fig. 3.

Der Schuppenteiler 70 bildet die Schuppensegmente sowie die Lücken dazwischen aus und verdichtet die Schuppensegmente im Vergleich zum Schuppenstrom etwa um einen Faktor 3. Der Abstand der in Förderrichtung betrachteten Enden der in Förderrichtung unmittelbar aufeinander folgenden Artikel beträgt im Schuppenstrom rund 100 mm, im verdichteten Schuppensegment rund 30 mm. Dadurch kann das Schuppensegment nur mit etwa 0.3 - 0.4 m pro Sekunde und der Schuppenstrom mit etwa 0.9 -1.4 m pro Sekunde gefördert werden, um in derselben Zeit dieselbe Anzahl Artikel zu fördern.

Die beiden Befülleinrichtungen 10 und 10.2 bringen das Schuppensegment in Austragetaschen 12 ein und stapeln es dort. Die Austragetaschen 12 sind in verfahrbaren Halterungen 31 angeordnet, welche gegenüber einem horizontalen Boden wie in Fig. 3 gekippt sind. Die Halterungen 31 können entsprechend der Füllhöhe der Austragetaschen 12 entlang und entgegengesetzt der Stapelrichtung und somit relativ zu den Befülleinrichtungen 10 und 10.2 verfahren werden. Dadurch ergeben sich die bereits erwähnten Vorteile einer Verstellvorrichtung und deren Anwendung. Der Stapelmechanismus der Ausführungsform in Fig. 7 umfasst die verfahrbaren Halterungen 31 sowie die Förderbandweiche 71. Die Anwendung eines Schuppenteilers 70 und einer Förderbandweiche 71 in Kombination mit zwei Befülleinrichtungen 10 und 10.2 erlaubt ein Einbringen und Stapeln von Zustelleinheiten 11 in Austragetaschen 12 in hoher Geschwindigkeit, namentlich mit einer Taktgeschwindigkeit in einer Grössenordnung von bis zu 10 Zustelleinheiten 11 pro Sekunde.

## Patentansprüche

1. Befüllsystem umfassend einen Behälter und eine Befülleinrichtung (10) mit einer Fördervorrichtung zum Einbringen von flächigen Zustelleinheiten (11), welche einen oder mehrere flächige Artikel umfassen, in den Behälter, wobei die Befülleinrichtung (10) über einen Stapelmechanismus verfügt, welcher die Zustelleinheiten (11) in den Behälter stapelt, **dadurch gekennzeichnet, dass** der Behälter als Austragetasche (12, 40, 60) ausgestaltet ist, und dass das Befüllsystem eine Steuerungsvorrichtung (33) umfasst, welche den Stapelmechanismus derart steuert, dass die Zustelleinheiten (11) als Artikelstrom durch eine erste Öffnung der Austragetasche (12, 40, 60) in einen Stauraum (18) der Austragetasche (12, 40, 60) eingebracht werden und die eingebrachten Zustelleinheiten (11) im Stauraum (18) einen Stapel bilden.

2. Befüllsystem gemäss Anspruch 1, **dadurch gekennzeichnet, dass** die Befülleinrichtung (10) eine Verstellvorrichtung (30) für die Austragetasche (12, 40, 60) umfasst, wobei die Verstellvorrichtung (30) entsprechend einem Füllstand der Austragetasche (12, 40, 60) die Position der Austragetasche (12, 40, 60) verändert.

3. Befüllsystem gemäss Anspruch 1 oder 2, **dadurch gekennzeichnet, dass** die Befülleinrichtung (10) einen Kennzeichnungsmechanismus umfasst, welcher während dem Stapeln oder durch die Art des Stapelns der Zustelleinheiten (11) die Austragetasche (12, 40, 60) mit Zusatzinformation versieht.

4. Befüllsystem gemäss einem der Ansprüche 1 bis 3, **dadurch gekennzeichnet, dass** das Befüllsystem einen Schuppenteiler (70) und in Förderrichtung F nachfolgend angeordnet mindestens eine Befülleinrichtung (10, 10.2) umfasst.

5. Befüllsystem gemäss einem der Ansprüche 1 bis 4, **dadurch gekennzeichnet, dass** die Austragetasche (12, 40, 60) Teile umfasst, die aus flexiblem Material ausgebildet sind.

6. Befüllsystem gemäss einem der Ansprüche 1 bis 5, **dadurch gekennzeichnet, dass** die Austragetasche (12, 40, 60) zum Entnehmen der flächigen Artikel aus der Austragetasche (12, 40, 60) mindestens eine zweite Öffnung aufweist.

7. Befüllsystem gemäss einem der Ansprüche 1 bis 6, **dadurch gekennzeichnet, dass** die erste und/oder zweite Öffnung der Austragetasche (12, 40, 60) mindestens für einen Teil der Öffnung einen wieder verschliessbaren Verschluss aufweist, insbesondere Druckknöpfe, einen Reiss- oder Klettverschluss oder Bänder, Schnüre oder Laschen.

8. Befüllsystem gemäss einem der Ansprüche 6 bis 7, **dadurch gekennzeichnet, dass** die erste und die zweite Öffnung der Austragetasche (12, 40, 60) auf entgegen gesetzten Seiten der Austragetasche (12, 40, 60) liegen und insbesondere derart angeordnet sind, dass mindestens ein Stauraum (18) der Austragetasche (12, 40, 60) bei geöffneter erster und zweiter Öffnung im Wesentlichen einen durch die Austragetasche (12, 40, 60) hindurch tretenden Durchgang bildet.

9. Verfahren zum Befüllen einer Austragetasche (12, 40, 60), insbesondere zum Befüllen einer Austragtasche unter Verwendung eines Befüllsystems gemäss einem der Ansprüche 1 bis 8, umfassend folgende Schritte:
- Fördern von Zustelleinheiten (11) in einem Artikelstrom, und
- Stapeln der Zustelleinheiten (11) aus dem Artikelstrom in einer Austragetasche (12, 40, 60), wobei die Zustelleinheiten (11) mit einer ersten Stirnseite voraus durch eine erste Öffnung der Austragetasche (12, 40, 60) in die Austragetasche (12, 40, 60) eingebracht werden und die Zustelleinheiten (11) im Wesentlichen in Schwerkraftrichtung gestapelt werden.

10. Verfahren gemäss Anspruch 9, **dadurch gekennzeichnet, dass** die Position der Austragetasche (12, 40, 60) entsprechend einem Füllstand der Austragetasche (12, 40, 60) angepasst wird.

11. Verfahren gemäss einem der Ansprüche 9 bis 10, **dadurch gekennzeichnet, dass** die Zustelleinheiten (11) in einer zuvor definierten Reihenfolge gestapelt werden.

12. Verfahren gemäss einem der Ansprüche 9 bis 11, **dadurch gekennzeichnet, dass** während des Stapelns oder durch die Art des Stapelns die Austragetasche (12, 40, 60) mit Zusatzinformation versehen wird.

## Claims

1. A filling system comprising a container and a filling device (10) with a conveying apparatus for introducing flat delivery units (11), which comprise one or several flat articles, into the container, wherein the filling device (10) has a stacking mechanism, which stacks the delivery units (11) into the container, **characterized in that** the container is developed as a delivery bag (12, 40, 60) and that the filling system comprises a control apparatus (33), which controls the stacking mechanism in such a manner that the delivery units (11) are introduced as an article stream through a first opening of the delivery bag (12, 40, 60) into a buckle space (18) of the delivery bag (12, 40, 60) and the introduced delivery units (11) form a stack in the buckle space (18).

2. The filling system as claimed in claims 1, **characterized in that** the filling device (10) includes an adjustment apparatus (30) for the delivery bag (12, 40, 60), wherein the adjustment apparatus (30) modifies the position of the delivery bag (12, 40, 60) corresponding to a fill level of the delivery bag (12, 40, 60).

3. The filling system as claimed in one of claims 1 or 2, **characterized in that** the filling device (10) includes an identification mechanism, which provides the delivery bag (12, 40, 60) with additional data during stacking or as a result of the type of stacking of the delivery units (11).

4. The filling system as claimed in one of claims 1 to 3, **characterized in that** the filling system includes a shingle distributing means (70) and at least one filling device (10, 10.2) arranged downstream in the conveying direction F.

5. The filling system as claimed in one of claims 1 to 4, **characterized in that** the delivery bag (12, 40, 60) includes parts which are realized from flexible material.

6. The filling system as claimed in one of claims 1 to 5, **characterized in that** the delivery bag (12, 40, 60) comprises at least one second opening for removing the flat articles from the delivery bag (12, 40, 60).

7. The filling system as claimed in one of claims 1 to 6, **characterized in that** the first and/or second opening of the delivery bag (12, 40, 60) comprises a re-closable closure, in particular press buttons, a zipper or Velcro fastener or tapes, cords or clips, for at least part of the opening.

8. The filling system as claimed in either of claims 6 to 7, **characterized in that** the first and the second opening of the delivery bag (12, 40, 60) lie on opposite sides of the delivery bag (12, 40, 60) and are arranged in particular in such a manner that at least one buckle space (18) of the delivery bag (12, 40, 60) essentially forms a passage passing through the delivery bag (12, 40, 60) when the first and second openings are open.

9. A method for filling a delivery bag (12, 40, 60), in particular for filling a delivery bag using a filling system as claimed in claims 1 to 8, said method including the following steps:
- convey delivery units (11) in an article stream, and
- stack the delivery units (11) from the article stream in a delivery bag (12, 40, 60), wherein the delivery units (11) are introduced into the delivery bag (12, 40, 60) through a first opening of the delivery bag (12, 40, 60) with a first end face in front, and the delivery units (11) are essentially stacked in the direction of the force of gravity.

10. The method as claimed in claim 9, **characterized in that** the position of the delivery bag (12, 40, 60) is adapted corresponding to a fill level of the delivery bag (12, 40, 60).

11. The method as claimed in either of claims 9 to 10, **characterized in that** the delivery units (11) are stacked in a previously defined sequence.

12. The method as claimed in one of claims 9 to 11, **characterized in that** during stacking or as a result of the type of stacking, the delivery bag (12, 40, 60) is provided with additional data.

## Revendications

1. Système de remplissage comprenant un récipient et un dispositif de remplissage (10) doté d'un ensemble de transport pour insérer dans un récipient des unités plates d'amenée (11) qui comprennent un ou plusieurs articles plats, le dispositif de remplissage (10) disposant d'un mécanisme d'empilement qui empile les unités d'amenée (11) dans le récipient,
**caractérisé en ce que**
le récipient est configuré comme poche d'extraction (12, 40, 60) et
**en ce que** le système de remplissage comprend un ensemble de commande (33) qui commande le mécanisme d'empilement de telle sorte que les unités d'amenée (11) soient insérées dans un espace d'accumulation (18) de la poche d'extraction (12, 40, 60) en tant que flux d'articles par une première ouverture de la poche d'extraction (12, 40, 60) et que les unités d'amenée (11) insérées forment une pile dans l'espace d'accumulation (18).

2. Système de remplissage selon la revendication 1, **caractérisé en ce que** le dispositif de remplissage (10) comporte un ensemble d'ajustement (30) de la poche d'extraction (12, 40, 60), l'ensemble d'ajustement (30) modifiant la position de la poche d'extraction (12, 40, 60) en fonction de l'état de remplissage de la poche d'extraction (12, 40, 60).

3. Système de remplissage selon les revendications 1 ou 2, **caractérisé en ce que** le dispositif de remplissage (10) comporte un mécanisme de caractérisation qui dote la poche d'extraction (12, 40, 60) d'informations supplémentaires pendant l'empilement ou selon la nature de la pile des unités d'amenée (11).

4. Système de remplissage selon l'une des revendications 1 à 3, **caractérisé en ce que** le système de remplissage comporte un diviseur d'empilement (70) et au moins un dispositif de remplissage (10, 10.2) qui le suit dans la direction de transport F.

5. Système de remplissage selon l'une des revendications 1 à 4, **caractérisé en ce que** la poche d'extraction (12, 40, 60) comprend des parties réalisées en un matériau flexible.

6. Système de remplissage selon l'une des revendications 1 à 5, **caractérisé en ce que** la poche d'extraction (12, 40, 60) présente au moins une deuxième ouverture pour l'enlèvement des articles plats hors de la poche d'extraction (12, 40, 60).

7. Système de remplissage selon l'une des revendications 1 à 6, **caractérisé en ce que** la première et/ou la deuxième ouverture de la poche d'extraction (12, 40, 60) présentent au moins pour une partie de l'ouverture une fermeture qui peut être refermée, en particulier du bouton poussoir, une fermeture à déchirure ou à chaîne ou des rubans, des cordons ou des pattes.

8. Système de remplissage selon l'une des revendications 6 et 7, **caractérisé en ce que** la première et la deuxième ouverture de la poche d'extraction (12, 40, 60) sont situées sur des côtés mutuellement opposés de la poche d'extraction (12, 40, 60) et sont disposées en particulier de telle sorte qu'au moins un espace d'accumulation (18) de la poche d'extraction (12, 40, 60) forme un passage qui traverse essentiellement la poche d'extraction (12, 40, 60) lorsque la première et la deuxième ouverture sont ouvertes.

9. Procédé de remplissage d'une poche d'extraction (12, 40, 60), en particulier de remplissage d'une poche d'extraction par recours à un système de remplissage selon l'une des revendications 1 à 8, le procédé comportant les étapes suivantes :
transport d'unité d'amenée (11) dans un flux d'articles et
empilement des unités d'amenée (11) à partir du flux d'articles dans une poche d'extraction (12, 40, 60), les unités d'amenée (11) étant insérées par un premier côté frontal dans la première ouverture de la poche d'extraction (12, 40, 60) dans la poche d'extraction (12, 40, 60) et les unités d'amenée (11) étant empilées essentiellement dans la direction de la force de gravité.

10. Procédé selon la revendication 9, **caractérisé en ce que** la position de la poche d'extraction (12, 40, 60) est adaptée à l'état de remplissage de la poche d'extraction (12, 40, 60).

11. Procédé selon l'une des revendications 9 et 10, **caractérisé en ce que** les unités d'amenée (11) sont empilées dans une succession préalablement définie.

12. Procédé selon l'une des revendications 9 à 11, **caractérisé en ce que** la poche d'extraction (12, 40, 60) est dotée d'informations supplémentaires pendant l'empilement ou selon la nature de l'empilement.
